# EUROPEAN PATENT APPLICATION

(11) **EP 1 881 330 A2**
(43) Date of publication of application: **23.01.2008**
(21) Application number: 07252856.5
(22) Date of filing: 19.07.2007
(51) Int. Cl.: G01N 35/10

(54) **Fluid metering in a metering zone**

(30) Priority: 20.07.2006 US 832045 P; 31.05.2007 US 756273
(71) Applicant: ORTHO-CLINICAL DIAGNOSTICS, INC., Rochester, New York 14626 (US)
(72) Inventor: Barnes, Lawrence, Honeoye Falls, NY 14472 (US); Denton, Gary, Honeoye Falls, NY 14472 (US)
(74) Representative: Mercer, Christopher Paul

(57) **Abstract**

A method for metering samples located in a metering zone of a diagnostic analyzer includes: providing samples located within the metering zone on the analyzer; providing a metering system having a robotic arm which is extendable from a linearly translatable pivot. The arm accesses multiple sample points in the metering zone. The robotic arm is moved to position a metering probe located on the end of the arm distal from the pivot point over the sample. The probe moves vertically relative to the sample in the direction of the sample and aspirates the sample. A metering system for a diagnostic analyzer includes: a truck mounted on a guide rail, said truck linearly movable along the guide rail; a robotic arm pivotably attached and extending away from the truck, the robotic arm being rotatable in a plane that is horizontal and parallel to the line of linear motion of the truck; a metering head having a probe thereon for aspirating and dispensing a liquid, the metering head is attached to the robotic arm. At least one of the metering head or robotic arm is movable in a vertical direction to lower the probe. In a preferred embodiment, the guide rail extends along the rear of the analyzer and the arm extends in front of the guide rail. In another preferred embodiment, a second metering system is provided.

## Description

The present invention relates to fluid metering, such as sample metering in an automated diagnostic analyzer. In particular, the present invention relates to accessing fluids in a metering zone in an automated diagnostic analyzers to allow greater access to a larger number of samples. The present invention also relates to a robotic arm allowing access within a metering zone.

Known sample metering systems in diagnostic analyzers typically operate on a predefined metering timing cycle and are able to aspirate a new sample upon the start of each new timing cycle. For maximum analyzer throughput, it is desired to have a new sample available for aspiration at every metering timing cycle or else an opportunity to start a new test is missed, and analyzer throughput is reduced. In order to aspirate and start a new test, the analyzer also calculates all subsequent process steps required to process that test according to that test's pre-defined protocol. The analyzer schedules and reserves all necessary analyzer resources for that test, such as consumables, reaction vessels, sensitometry devices, reagents, reagent delivery subsystems, and all associated analyzer resources for that test. If one of those resources is not available to be scheduled and reserved for when it will be needed for a particular test, then that test cannot start until a new time can be found, where all resources are available. On traditional analyzers, this scheduling activity is a large contributor to throughput reductions because tests must wait for a non-conflicting time before they can start, and throughput is significantly reduced.

For ease of use, widely varying test technologies (formats) which were previously developed to work in individual stand-alone analyzers are now being integrated into a single analyzer, further complicating the scheduling task. The test requests for a particular sample might require that some tests for that sample be processed in a wet system format using an optical cuvette, other tests processed in a dry system format using a dry slide element, and other tests processed in an electrochemical format, and so on. It is common that tests for one patient sample may be run in several different processing formats on an analyzer in order to get all the test results requested for that sample. If one of those processing formats temporarily is unavailable because it is or will be in use at the time it is needed for that particular sample test, then that processing format's availability acts as a throughput constraint, or bottle neck. In traditional analyzers, this typically means that if one of several analyzer processing formats is unavailable, no sample requiring tests from that processing format can start its list of tests. That sample, and all the tests requested from it, must wait until all required processing formats will be available when needed to process the tests in that sample.

In known analyzers, operators, i.e., users adapt to this shortcoming by developing a working understanding of the complexities of each processing format on an analyzer, and pre-analytically rearranging the sample order, so as to keep throughput reduction to a minimum.

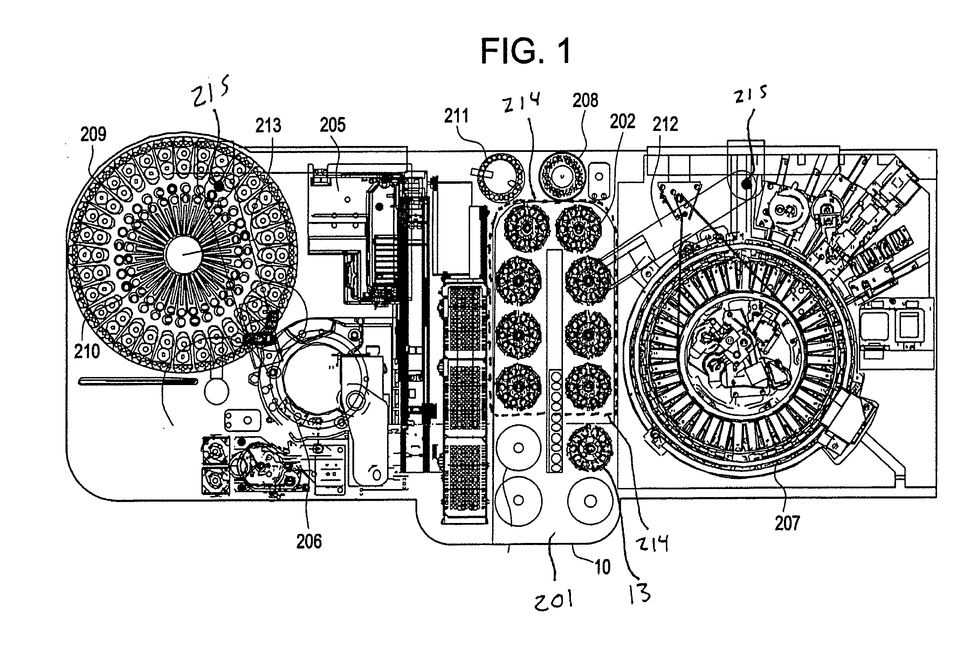

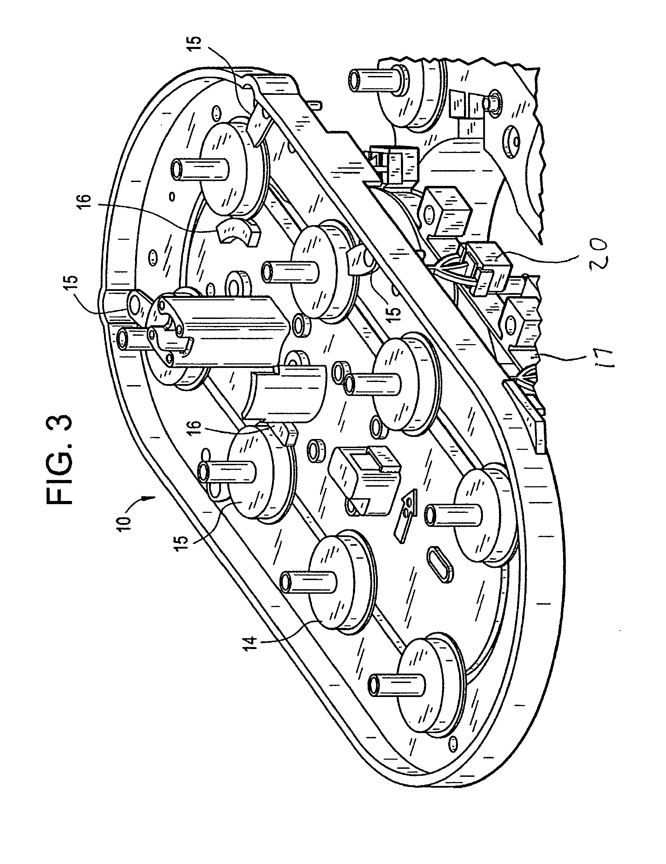

Examples of known diagnostic analyzers include immunodiagnostic analyzers such as the Vitros® ECi immunodiagnostic analyzer, or clinical chemistry analyzers such as the Vitros® 5,1 FS, both sold by Ortho-Clinical Diagnostics, Inc. All such analyzers are collectively called diagnostic analyzers. Representative systems are disclosed, for example, in U.S. Published Patent Application No. 2003/0026733 and in U.S. Application No. 11/091,283 filed March 28, 2005. Such systems have sample handling systems. For example, in the '733 publication a sample handler 14 has sample trays 18, which contain individual sample containers, such as test tubes. The sample handler transports the sample trays on a belt (not shown) to metering transport rail 26. The metering truck will be able to aspirate from those sample trays that lie in a straight line (i.e., along a line parallel to transport rail 26), where metering truck 30 containing a sample aspirate/dispense probe will aspirate sample out of the individual sample containers. The sample trays 18 are shown in more detail in Figure 3 of the '283 application. The sample tray (or sample carousel) 220 sits atop sample tray transport 210 which is either magnetically transported or is transported by a belt system in an elliptical path to a sample aspirate station 230 (see Figure1). The sample tray can rotate to bring the individual samples into alignment with the metering probe at the sample aspiration station.

Both of these systems are constrained in that the metering probe can only access less than all available sample carousel at a time. This has the effect of slowing down the metering process. Also, it constrains the number of samples that can be accessed at single time. For example, if one carousel contains a first sample being analyzed for HDL and another carousel also contains a second sample also being analyzed for HDL, it would increase throughput to analyze both samples for HDL. However, if the sample carousel is out of range the sample transport would have to position the second carousel under the metering probe, hence slowing down the overall system speed. Thus, there is a need for accessing a greater number of sample carousels. For the foregoing reasons, there is a need for a metering arm for accessing a greater number of samples to allow greater throughput in the diagnostic analyzer.

Also, in so-called combinational clinical analyzers a plurality of dry chemistry systems and a plurality of wet chemistry systems, for example, can be provided within a contained housing. Each of the above chemistry systems is unique in terms of their operation. For example, known "dry" chemistry systems typically include a sample supply that includes a number of dry slide elements, a metering/transport mechanism, and an incubator having a plurality of test read stations. A quantity of sample is aspirated into a metering tip using a proboscis or probe carried by a movable metering truck along a transport rail. A quantity of sample from the tip is then metered (dispensed) onto a dry slide element that is loaded into the incubator. The slide element is incubated and optical or other reads are taken for analyte detection. A "wet" chemistry system on the other hand, utilizes a reaction vessel such as a cuvette, into which quantities of patient sample, at least one reagent fluid, and/or other fluids are combined for conducting an assay. The assay is also incubated and tests are conducted for analyte detection. The "wet" chemistry system also includes a metering mechanism to transport patient sample fluid from the sample supply to the reaction vessel.

In these combinational chemistry systems there is a need for metering arm(s) that can access both the wet and dry systems.

US Published Application No. 2005/0220670 discloses a multipath access system for use in an automated diagnostic analyzer. US Patent Application No. 2004/0022680 discloses a device that includes a rotatably mounted tool holder movable in the x, y and z directions as well as rotatable around the z-axis.

Thus, there is a need in the art for being able to access a greater number of samples in a diagnostic analyzer without having to move the sample in order to increase the throughput of the analyzer.

### SUMMARY OF THE INVENTION

The present invention is directed to a method and that solves the foregoing problem of accessing a greater number of samples to provide higher throughput in the diagnostic analyzer.

One aspect of the invention is directed to a method for metering samples located in a metering zone of a diagnostic analyzer. The method includes: providing samples located within the metering zone on the analyzer; providing a metering system having a robotic arm which is extendable from a linearly translatable pivot, said arm accessing multiple sample points in said metering zone; moving said robotic arm to position a metering probe located on the end of the arm distal from said pivot point over one of said samples; moving the probe vertically relative to the sample in the direction of the sample; and aspirating the sample.

Another aspect of the invention provides a method for increasing throughput in a diagnostic analyzer. The method includes: providing multiple samples in a known arrangement in a metering zone in the vicinity of a metering arm; providing a scheduling algorithm to determine which order samples are aspirated to increase throughput; accessing samples throughout the metering zone with the metering arm; aspirating one of the samples at a position where the sample is located within the metering zone based on the aspirating order determined by the algorithm; and transferring the sample to a receiving element located at another position on the analyzer. In a preferred embodiment, the receiving element is one or more of a dry slide element, an optically transparent cuvette or a cup-shaped microwell.

Yet another aspect of the invention provides a metering system for a diagnostic analyzer. The system includes a truck mounted on a guide rail, said truck linearly movable along said guide rail; a robotic arm pivotably attached and extending away from said truck, said robotic arm rotatable in a plane that is horizontal and parallel to the line of linear motion of said truck; a metering head having a probe thereon for aspirating and dispensing a liquid, said metering head attached to said robotic arm; and at least one of said metering head or robotic arm being movable in a vertical direction to lower said probe. In a preferred embodiment, the guide rail extends along the rear of the analyzer and said arm extends in front of the guide rail. In a preferred embodiment, a second metering system is provided.

Still another aspect of the invention provides a diagnostic analyzer. The analyzer includes: a sample handler; a guide rail extending along the rear of the analyzer; a truck mounted on said guide rail, said truck linearly movable along said guide rail; a robotic arm pivotably attached and extending away from said truck and in front of the guide rail, said robotic arm rotatable in a plane that is horizontal and parallel to the line of linear motion of said truck; a metering head having a probe thereon for aspirating and dispensing a liquid, said metering head attached to said robotic arm; at least one of said metering head or robotic arm being movable in a vertical direction to lower said probe; a receiving element for receiving sample aspirated by the metering head; an incubator; and a measuring device for measuring for the presence or concentration of an analyte in a sample.

Still another aspect of the invention provides a method for determining the presence or concentration of one or more analytes in multiple samples. The method includes: providing samples in a metering zone on a diagnostic analyzer; metering the samples according to the method described above; dispensing at least one of the samples into a receiving element; incubating the sample in the receiving element; and measuring the incubated sample for the presence or concentration of the analyte. In a preferred embodiment, at least three samples have the presence or concentration of three or more analytes determined, one of the samples is dispensed into a receiving element which is a slide element, a second of the samples is dispensed into a receiving element which is an optically transparent cuvette, and a third of the samples being dispensed into a receiving element which is a streptavidin coated cup-shaped microwell.

In a preferred aspect of the present invention, the combination of a metering zone and a flexible scheduling algorithm resolves the throughput constraints and allows an analyzer to run very close to its maximum theoretical throughput, regardless of test requests within a sample, or analyzer resource availability.

Further objects, features and advantages of the present invention will be apparent to those skilled in the art from detailed consideration of the preferred embodiments that follow.

### BRIEF DESCRIPTION OF THE DRAWINGS

Figure 1 is a schematic top view of a diagnostic analyzer that includes accessing samples in greater than one dimension.
Figure 2 shows four sample trays positioned for sample access in greater than one dimension according to a preferred embodiment of the present invention.
Figure 3 shows a sample handler having eight sample tray transports according to a preferred embodiment of the present invention.
Figure 4 is a plane schematic view of a combinational diagnostic analyzer having two metering systems according to a preferred embodiment of the present invention.

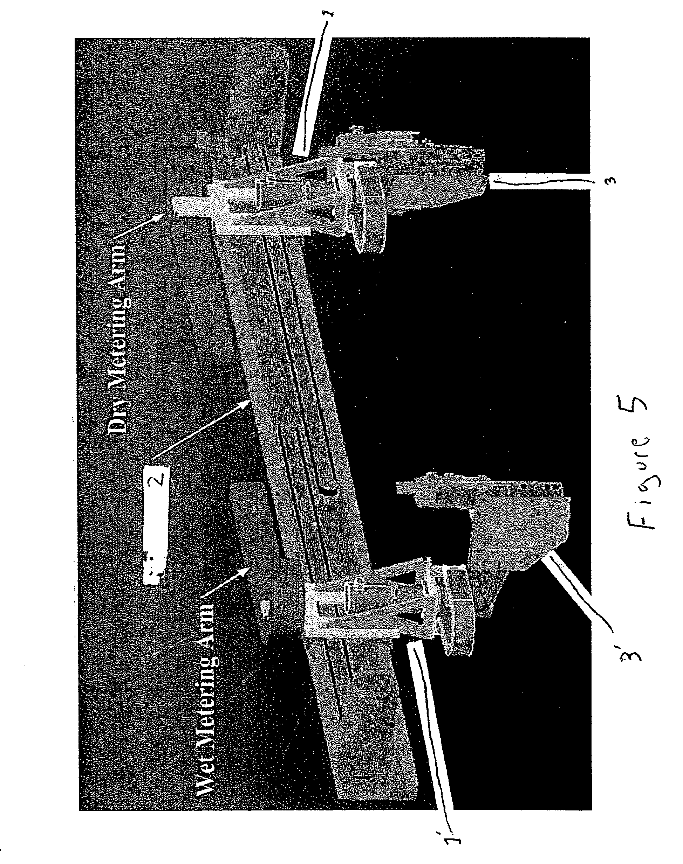

Figure 5 is a plane schematic view of two metering systems and the guide rail according to a preferred embodiment of the present invention.

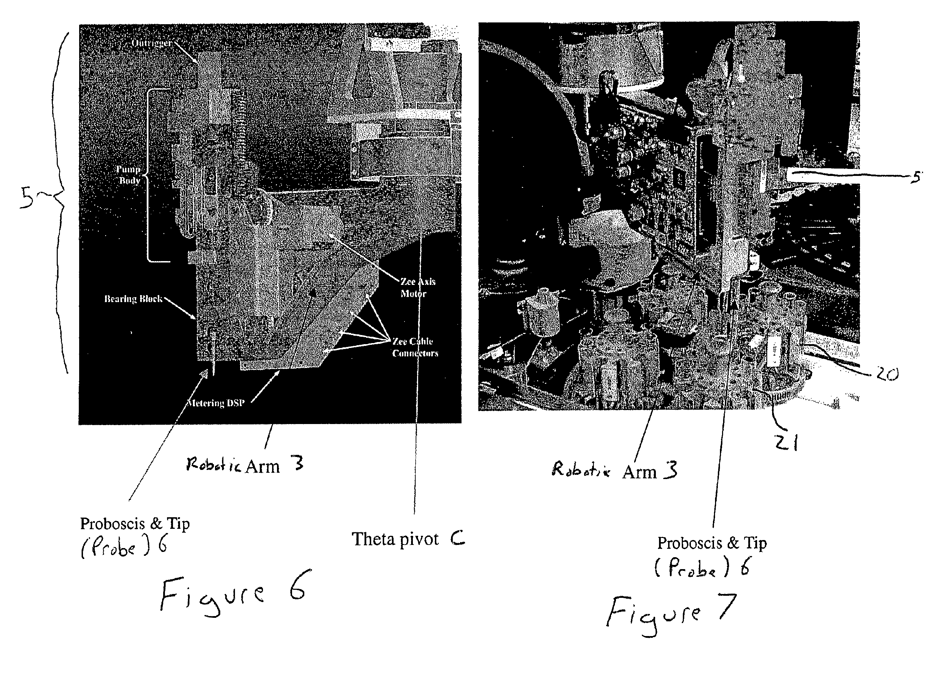

Figure 6 is a plane schematic view of a metering head and robotic arm pivotably attached to the rail mounted truck according to a preferred embodiment of the present invention.
Figure 7 shows four sample trays positioned for sample access in greater than one dimension using a robotic arm and metering head according to a preferred embodiment of the present invention.

### DETAILED DESCRIPTION OF PREFERRED EMBODIMENTS

The present inventions solves the foregoing problem of metering samples in a metering zone instead of at a single point or station or along a straight line. As used herein, "metering zone" is defined as a region or area on an analyzer in which samples may be located at any point or position within the area and which a metering arm can reach. Preferably, at the point or position, the centerline of the metering system probe will be able to be positioned and held for sample aspiration. The metering zone is not a single metering point or a metering line (e.g., the single metering line formed by linear translation of the metering truck 30 in the '733 publication) for sample aspiration as it is on known diagnostic analyzers, but rather it is a zone of a theoretically infinite number of sample aspiration points, all of within reach of the sample metering arm. The area has boundaries in at least two directions, e.g., horizontal axes perpendicular to one another, thereby having at least two dimensions. The samples may located on a planar surface bounded by the area, or the samples may be located within the area, in a space above or below such planar surface. In a preferred embodiment, the metering zone is located in the vicinity of the metering system to facilitate access to the samples by the metering arm. An example of a metering zone 214 (dashed line) is shown in Figure 1. The metering zone can take any desired shape, preferably a polygon, such as a rectangle or square.

The ability to aspirate and/or dispense sample or reagent fluid at any point in a 2-dimensional metering zone allows much greater flexibility in the layout of aspiration and dispense points on an analyzer, as compared to single "point-in-space" metering systems, or traditional linear or rotary metering systems. This enables an analyzer layout that is more compact and more ergonomically convenient to the user of the analyzer in addition to the ability to access all samples.

Moreover, the ability to meter at any point within the metering zone and having all samples in the metering zone accessible at any given time according to the present invention allows operators to load samples with a wide range of test mixes within those samples, and load those samples in any convenient order with no knowledge of the workings of the analyzer, and still realize a processing throughput greater than normal throughput, preferably close to the theoretical throughput for that analyzer. The large number of samples in the metering zone, preferably with a flexible scheduling algorithm described below, enables an analyzer with throughput that is robust against variation in test mix or sample input order.

Because more samples are available to the metering system than in known analyzers, the sample status of individual samples can be changed after they have been introduced to the analyzer. This can enable the creation of operator-specific rules on sample aspiration priority. For example, an operator could define that any pediatric samples get first priority, without affecting overall analyzer throughput. Another example would be a case where access to a sample result became urgent while the sample was on board waiting to be processed. With this invention, the operator can tell the analyzer to make that sample the highest priority, and it will not materially affect throughput, and the operator does not have to physically do anything with the sample.

The method of the present invention can be used on an analyzer such as that shown in Figures 1-3. Figure 1 depicts the internal layout of the key components of a preferred embodiment of a diagnostic analyzer usable with the method and apparatus of the present invention. The sample handler 10 is divided into two regions, the metering zone 202 and the operator load/unload zone 201. Contained within each zone are sample trays or carousels 13 capable of holding up to ten individual samples. There are three chemistry zones, two wet chemistry zones 205 and 206, and a dry chemistry zone 207 which incubate and take measurements on the treated samples. In this embodiment one of the wet chemistry zones is a cuvette based system having sample and reagent added to the cuvette and the other wet chemistry zone is an immunodiagnostic system using cup-shaped microwells, preferably streptavidin coated. Additionally, there are two reagent supply areas 209 and 210, a disposable tip supply area 208, and an aliquot buffer facility 211. Two robotic arms are contained in rack, one 212 having the capability to aspirate and meter samples by random access from any point in the metering zone to any one of the three chemistry zones, and the other 213 having the capability to aspirate and meter reagents by random access from any of the reagent supplies to any one of the three chemistry zones. Each robotic arm pivots around pivot points 215.

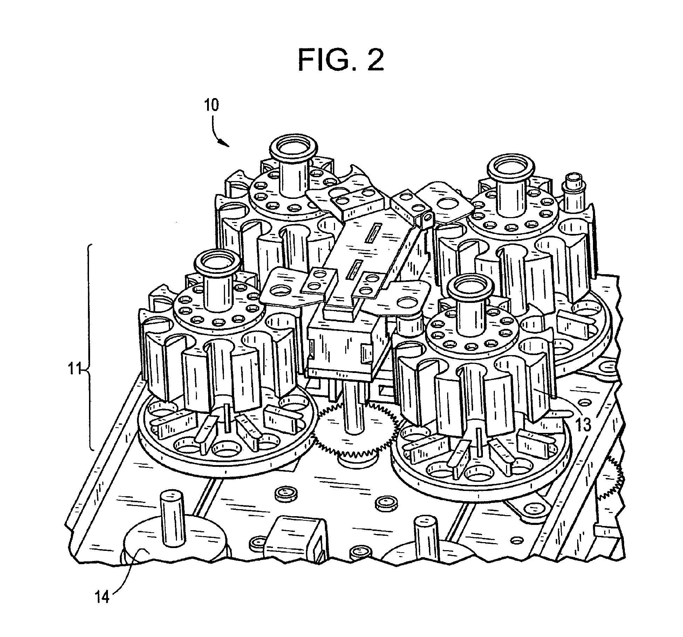

Figures 2 and 3 show a sample handler 10 on a diagnostic analyzer, such as that described above. Sample handler 10 includes a sample carrier 11 and conveyor belt 17. Sample carrier 11 further includes sample tray or carousel 13, which sits atop sample tray transport 14, which in a preferred embodiment is a puck-shaped disk (Figure 3) as described in copending application U.S. Serial No. 11/672,614, filed February 2, 2007, entitled "Two Dimensional Sample Handler,". The sample handler shown in Figure 2 and Figure 3 employ an array of samples in two-dimensions. A preferred embodiment of the sample handler has eight sample carriers where four of the carriers are in the load/unload area and four of the sample carriers are in the metering zone. Additionally a separate lane for sample trays containing STAT samples (i.e., samples having priority) can be provided. This would allow one or more additional sample trays to be accessible to the robotic arm. The STAT lane can be provided within the sample handler or on either side of the sample handler. In the Figure 2 embodiment, the four carriers in the metering zone are shown with the combined sample tray and sample container holder and two of the four carriers in the load/unload area are shown with only sample tray transport 14. In the Figure 3 embodiment, the four sample tray transports are shown in the metering area with registration elements 15 and 16. The sample tray transport is connected to the conveyor belt 17 via flexure element 20.

The sample carriers are driven from position to position by means of a conveyor belt 17. In a preferred embodiment, up to four sample trays to be accessed by metering arm, described below, can be positioned or registered simultaneously. In one embodiment, the individual trays may be rotatable to provide one position on each tray that the robotic arm has to access. This provides less complicated controls for the robotic arm.

In a preferred embodiment, two or more samples, preferably at three or more samples are located within the metering zone on the analyzer. The samples are preferably at known locations in the metering zone in order to enable the operator or microprocessor running a test algorithm for the sample to know where the sample is for aspiration at the appropriate time.

For example, samples are identified by reading their attached sample identification barcodes, or by manual entry of the sample identification. Samples then are brought into the metering zone and registered in a physical location within the metering zone. Once registered within the metering zone, any sample in the metering zone is accessible by the metering system. A preferred embodiment is to have a large number of samples in this metering zone, all of which are accessible to the metering system.

A metering system includes a pivot point from which a metering arm extends. The metering arm extends from the pivot point and is rotatable around the pivot point. The pivot point is also linearly translatable, thus providing the two degrees of freedom necessary for the aspirating/dispensing probe to access sample anywhere within the metering zone. Preferably, the pivot point moves along a rail located at the rear of the analyzer as shown in Figure 1. When the metering arm positions the probe over the sample to be metered, the probe moves relative to the sample to allow the probe to access the sample. The probe or metering arm can be lowered to provide sample access. Preferably, metering arm is stationary in the vertical (z-axis) direction and the probe raises and lowers vertically to access sample. A preferred metering system is described more in depth below.

The metering zone is located such that the metering arm can access samples anywhere in the metering zone. Preferably, the metering zone is located in front of the line defined by the linear translation of the pivot point as shown in Figure 1. In another preferred embodiment, the metering zone can be bounded by the path defined by the conveyor described above in connection with Figures 1-3.

In operation, the samples are arranged in the metering zone, either automatically loaded by a sample load system, such as part of a known automated system, or loaded manually onto the analyzer by the user. The user or analyzer microprocessor selects which tests are to be performed and in what order. Preferably the selection is made by a scheduling algorithm described in more depth below. The metering arm then moves to the first sample to be aspirated by rotating around the pivot point and/or moving linearly along the guide rail. Once the probe at the distal end of the metering arm is located above the sample, the probe is lowered and sample is aspirated. After aspiration, the metering arm can transport the sample anywhere on the analyzer that the metering arm can reach. Generally, the sample will be delivered for further processing, such as at the dry or wet chemistry system formats described above, or at an immunological system format, in accordance with the test being performed on the sample.

As described above, the ability to access samples anywhere in a metering zone, provides the advantage of increasing throughput of samples through an apparatus. Accordingly, another aspect of the invention provides a method for increasing throughput in a diagnostic analyzer, which includes the ability to meter in a metering zone and the use of a scheduling algorithm. Preferably, increasing throughput will result in maximizing throughput to at least 65% of the theoretical maximum, preferably 70%, more preferably 80%, more preferably at least 90%, most preferably up to 97%. By increasing the throughput of samples through the analyzer, the number of tests performed will also be increased. As used herein, "increasing throughput" is defined as throughput greater than the maximum throughput obtainable with a diagnostic analyzer that meters sample from a single point or along a single line as opposed to metering from a metering zone described above. Preferably the throughput increase is greater than 5%, more preferably greater than 10 %, most preferably greater than 25%. Throughput can be described in the numbers of tests performed per hour. Another measure of increased analyzer efficiency is in the turn around time reduction. Turn around time is defined as the time from the sample arrival in the analyzer to when the sample result is reported to the user or operator. In the present invention turn around time reductions are preferably in the range of 6% to 44%, based on the turn around time in conventional clinical analyzers described above.

To increase throughput through an analyzer, a scheduling algorithm may be employed. The scheduling algorithms determine if all the resources required for an individual test on a sample are available for each individual test, at the exact and specific time in the processing protocol that the resources will be needed for that test. Resources include any process or system in the analyzer required to perform a test and include incubation, sample addition, washing, detecting, etc. The creation of the metering zone, with many samples available for sample aspiration, means that the test for these samples are preferably known by the analyzer scheduling algorithms. Allowing the scheduling algorithm to know of a large number of samples and the test(s) required for each of the sample has several advantages.

If the scheduling algorithm is aware of the tests required for a large number of on-board samples, it can then look for tests within those samples that can fit into existing open times in the analyzer schedule. Because the sample metering system can go to any sample that is in the metering zone with no throughput reduction (for example, within one metering cycle), samples can be aspirated in a sequence other than the sequence in which they were loaded on the analyzer. Therefore, the scheduling algorithm is able to determine preferred sampling sequence, in order to more effectively schedule analyzer operations. This allows throughput to stay near the theoretical throughput, regardless of the order that the samples were loaded onto the analyzer, and regardless of the mix of test requests within each sample.

If a particular processing format, e.g., wet, dry or immunological, on the analyzer already is running at capacity, and cannot accept new tests (for example, the dry chemistry electrolyte processing center is saturated with tests and can't accept new tests for 5 minutes), the metering zone and flexible scheduling enable the ability to skip tests that need to be run in the overloaded test format, and instead run all the other tests required from that sample or other samples that can be run in formats that are not overloaded and are available on that analyzer. Once the overloaded test format is available again, the tests needing to be processed in that format are scheduled. Scheduling algorithms particularly usable with the present invention are described in copending US Patent Application No. ( ) entitled "Method for Scheduling Samples in a Combinational Clinical Analyzer" (Attorney Docket No. CDS 5043) filed concurrently herewith.

The metering zone as described above is created by providing a metering system that can move in at least 2 degrees of freedom, such that the aspirating/dispense probe can access any sample within the metering zone, within one metering cycle.

The metering system includes one and preferably two robotic arms that have the capability to move not only linearly but also rotate in a plane that is horizontal and parallel to the line of linear motion in addition to being able to move in the vertical (z-direction) to enable sample acquisition (i.e., aspiration) or expulsion (i.e., dispensing) or as well reagent acquisition or expulsion. The robotic arms and metering heads having aspirate/dispense probe(s) should be able to position to approximately 25 discrete points within the reachable space (i.e. metering zone), and more preferably they are physically capable of positioning anywhere within that space (i.e., metering zone). Nothing physically limits the arm from reaching only a discrete touch point. The metering system(s) preferably include four elements as follows:
(1) A linear track where the position of a truck containing or supporting a robotic arm on the track is controlled by its own servo or stepper motor or means for moving the arm in a forward or backward linear fashion.
(2) A robotic arm capable of movement via the truck along the linear track and capable of pivoting at any point on the linear track in a plane that is horizontal and parallel to the linear track.
(3) A means, such as a metering head for sample acquisition (i.e., aspiration) and expulsion (i.e., dispensing) or reagent acquisition and expulsion attached to the end of each robotic arm.
(4) A means for vertical (z-direction) movement of the sample or reagent handling means (i.e. probe or proboscis) at the ends of the robotic arms.

In a preferred embodiment as shown in the figures, a diagnostic analyzer includes both a dry system A and a wet system B. Wet chemistry system B further includes a wet chemistry system and an immunological system. A guide rail 2 is positioned along at least a part of the length of the analyzer. The embodiment of Figure 1 shows both a metering system for the aspirating and dispensing reagents. Common features of the metering system for metering reagents are depicted using the same reference numerals as the sample metering system, except with the addition of a prime ('). The metering system includes truck 1 that moves along the guide rail 2. Pivotably attached through axis (C) to truck 1 is robotic arm 3. As Figure 1 depicts, the robotic arm 1 is pivotable and moves through plane 4.

The design of the metering system of the present invention has advantages over gantry type structures in known systems, such as described in U.S. Published Application No. 2003/0086822, particularly in the context of a diagnostic system. In gantry systems, a frame is required which surrounds the area in which a metering head can move. In order to move the metering head along the direction from front to back or vice versa, the supporting frame will necessarily extend from the back of the analyzer to the front of the analyzer. Having a supporting frame structure at the front of the analyzer, however, will interfere with the user (operator) who is generally positioned at the front of the analyzer loading an unloading samples into the analyzer. In addition, the profile of the analyzer will be significantly increased in order to accommodate the height of the frame in front. In contrast, in the present invention, all supporting structure is located in the back of the analyzer. No framework is required to extend to the front of the analyzer.

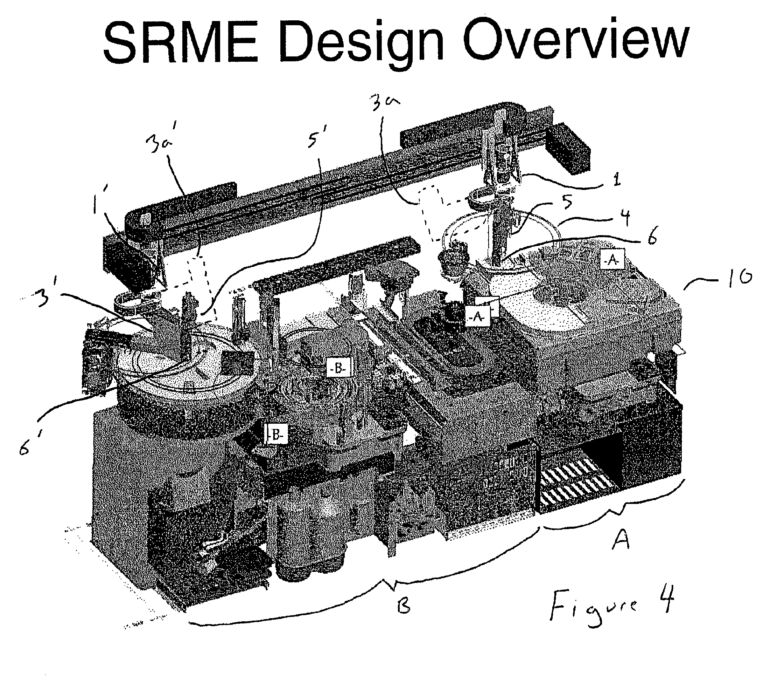

Another advantage of the metering system of the present invention is the storage of the metering arm when not in use. As shown in outline in Figure 4, the metering arm 3a and 3a' is pulled back to or tucked in against the guide rail 2 when not in use. This provides unfettered access to the remainder of the analyzer. In a multi-arm analyzer, this ensures that the other arm can process samples without the possibility of collision with the arm that is pulled back against the guide rail.

Attached to robotic arm 1 is metering head 5. Figure 3 shows metering head 5 in more detail. Metering head 5 includes a probe 6 also called a proboscis. The probe may include a disposable tip or may be non-disposable washable probe. As described above, the probe is movable in the vertical direction to access sample and/or reagent.

Figure 4 shows the robotic arm 3 and metering head 5 accessing multiple (in this embodiment four) rotatable sample trays 20 having sample tubes 21 (in this embodiment ten sample tubes) each. As Figure 4 depicts, the metering system is able to access the sample tubes in more than a single dimension (i.e., along the length of the guide rail). That is, the metering system by virtue of the pivotable robotic arm is able to access all areas of all of the sample trays 20.

The metering system according to the present invention also allows reduced mechanical adjustments at each subsystem. Specifically, since the metering system can come to any touch point in a metering zone, all adjustment of the physical interface between the metering subsystem and its touch point can be made to the metering system and not the touch point.

The present invention also provide a diagnostic analyzer and method for determining the presence or concentration of an analyte in at least one sample. The analyzer includes a sample handler and metering system as described above. The metering systems dispenses sample into a receiving element. The receiving element can be a thin film element, such as a thin film dry chemistry slide (e.g., dry chemistry system A), an optically transparent cuvette to which one or more reagent can be added (e.g., wet chemistry B), or a cup shaped microwell for performing an immunodiagnostic analysis, such as a streptavidin coated microwell (e.g., wet chemistry system B).

The analyzer also includes an incubator for incubating the sample and receiving element and a measuring device for measuring a characteristic of the sample which correlates to the presence of concentration of the analyte. Depending on the analysis being performed the measuring device can be a photometer, spectrophotometer, reflectometer or a luminometer.

The analyzer can further include a reagent supply for dispensing reagent into a cuvette or microwell. The metering system for accessing and dispensing reagent can include the metering system as described above. Also, for immunodiagnostic assays, a supply of wash water can also be provided.

In a preferred embodiment, at least three sample will be analyzed utilizing each of the different chemistry systems described above. That is, one of the samples will be dispensed onto a slide element, a second of the samples will be dispensed into an optically transparent cuvette, and a third of the samples will be dispensed into a streptavidin coated cup-shaped microwell.

It will be apparent to those skilled in the art that various modifications and variations can be made to the compounds, compositions and processes of this invention. Thus, it is intended that the present invention cover such modifications and variations, provided they come within the scope of the appended claims and their equivalents.

## Claims

1. A method for metering samples located in a metering zone on a diagnostic analyzer, comprising:
providing samples located within the metering zone on the analyzer;
providing a metering system having a robotic arm which is extendable from a linearly translatable pivot, said arm accessing multiple sample points in said metering zone;
moving said robotic arm to position a metering probe located on the end of the arm distal from said pivot point over one of said samples;
moving the probe vertically relative to the sample in the direction of the sample; and
aspirating the sample.

2. A method as claimed in claim 1, wherein at least three samples are provided.

3. A method as claimed in claim 1 or claim 2, wherein the metering zone is an area in the vicinity of the metering system.

4. A method as claimed in claim 3, wherein the metering zone area does not cross a line defined the linear translation of the pivot.

5. A method as claimed in claim 4, further comprising three or more samples on a non-linear conveyor such that the samples are not arranged in a straight line.

6. A method as claimed in claim 5, wherein the conveyor forms a continuous rectangular track and the samples are placed around the conveyor.

7. A method as claimed in claim 6, wherein the metering zone area is bounded by the conveyor.

8. A method as claimed in claim 5, wherein the samples are located on a sample carousel placed on the conveyor.

9. A method as claimed in any one of claims 1 to 8, wherein the moving further comprises linearly translating and rotating the robotic arm.

10. A method for increasing throughput in a diagnostic analyzer, comprising:
providing multiple samples in a known arrangement in a metering zone in the vicinity of a metering arm;
providing a scheduling algorithm to determine which order samples are aspirated to increase throughput;
accessing samples throughout the metering zone with the metering arm;
aspirating one of the samples at a position where the sample is located within the metering zone based on the aspirating order determined by the algorithm; and
transferring the sample to a receiving element located at another position on the analyzer.

11. A method as claimed in claim 10, wherein the throughput is measured in the number of tests per hour.

12. A method as claimed in claim 10 or claim 11, wherein the throughput is increased to at least 70% of theoretical maximum.

13. A method as claimed in any one of claims 10 to 12, wherein the receiving element is one or more of a dry slide element, an optically transparent cuvette or a cup-shaped microwell.

14. A metering system for a diagnostic analyzer comprising:
a truck mounted on a guide rail, said truck linearly movable along said guide rail;
a robotic arm pivotably attached and extending away from said truck, said robotic arm rotatable in a plane that is horizontal and parallel to the line of linear motion of said truck;
a metering head having a probe thereon for aspirating and dispensing a liquid, said metering head attached to said robotic arm; and
at least one of said metering head or robotic arm being movable in a vertical direction to lower said probe.

15. A metering system as claimed in claim 14, wherein the guide rail extends along the rear of the analyzer and said arm extends in front of the guide rail.

16. A metering system as claimed in claim 15, wherein the arm does not cross over the guide rail.

17. A metering system as claimed in claim 16, wherein the metering arm returns to a home position alongside the guide rail when not in use.

18. A metering system as claimed in any one of claims 14 to 17, wherein the metering head is movable in a vertical direction to lower said probe.

19. A metering system as claimed in any one of claims 14 to 18, wherein the robotic arm can access a metering zone having samples to be tested therein.

20. A metering system as claimed in any one of claims 14 to 19, further comprising:
a second truck mounted on said guide rail, said second truck linearly movable along said guide rail;
a second robotic arm pivotably attached and extending away from said second truck, said second robotic arm rotatable in a plane that is horizontal and parallel to the line of linear motion of said second truck;
a second metering head having a probe thereon for aspirating and dispensing a liquid, said second metering head attached to said second robotic arm;
at least one of said second metering head or second robotic arm being movable in a vertical direction to lower said probe.

21. A metering system as claimed in claim 20, wherein the truck, robotic arm, metering head and probe are positioned to access a dry system in a combinational diagnostic analyzer, and the second truck, second robotic arm, second metering head and second probe are positioned to access a wet system in the combinational diagnostic analyzer.

22. A diagnostic analyzer comprising:
a sample handler;
a guide rail extending along the rear of the analyzer;
a truck mounted on said guide rail, said truck linearly movable along said guide rail;
a robotic arm pivotably attached and extending away from said truck and in front of the guide rail, said robotic arm rotatable in a plane that is horizontal and parallel to the line of linear motion of said truck;
a metering head having a probe thereon for aspirating and dispensing a liquid, said metering head attached to said robotic arm;
at least one of said metering head or robotic arm being movable in a vertical direction to lower said probe;
a receiving element for receiving sample aspirated by the metering head; an incubator; and
a measuring device for measuring for the presence or concentration of an analyte in a sample.

23. A diagnostic analyzer as claimed in claim 22, further comprising a reagent supply.

24. A diagnostic analyzer as claimed in claim 22 or claim 23, wherein the receiving element further comprises a dry slide element, an optically transparent cuvette or a cup-shaped microwell.

25. A diagnostic analyzer as claimed in claim 24, wherein the microwell is a streptavidin coated microwell and further comprising a wash fluid supply and wash fluid dispenser for dispensing wash fluid into the microwell.

26. A diagnostic analyzer as claimed in any one of claims 22 to25, wherein the measuring device is a photometer, reflectometer or luminometer.

27. A diagnostic analyzer as claimed in any one of claims 22 to 26, wherein the sample handler includes a load/unload zone and a metering zone.

28. A diagnostic analyzer as claimed in any one of claims 22 to 27, wherein the sample handler includes a rectangular shaped conveyor belt and multiple sample tray transports mounted on said conveyor belt.

29. A method for determining the presence or concentration of one or more analytes in multiple samples, comprising:
providing samples in a metering zone on a diagnostic analyzer;
metering the samples according to the method of claim 1;
dispensing at least one of the samples into a receiving element;
incubating the sample in the receiving element; and
measuring the incubated sample for the presence or concentration of the analyte.

30. A method as claimed in claim 29, further comprising at least three samples having the presence or concentration of three different analytes determined, one of the samples being dispensed into a receiving element which is a slide element, a second of the samples being dispensed into a receiving element which is an optically transparent cuvette, and a third of the samples being dispensed into a receiving element which is a streptavidin coated cup-shaped microwell.
